# EUROPÄISCHE PATENTSCHRIFT

(11) **EP 3 287 412 B1**
(45) Veröffentlichungstag und Bekanntmachung des Hinweises auf die Patenterteilung: **29.05.2019**
(21) Anmeldenummer: 17187252.6
(22) Anmeldetag: 22.08.2017
(51) Int. Cl.: B66F 9/06, B66F 9/075, G01S 5/14

(54) **FLURFÖRDERZEUG SOWIE VERFAHREN ZUR STEUERUNG EINES FLURFÖRDERZEUGS**
INDUSTRIAL TRUCK AND METHOD FOR CONTROLLING AN INDUSTRIAL TRUCK
CHARIOT DE MANUTENTION AINSI QUE PROCÉDÉ DE COMMANDE D'UN CHARIOT DE MANUTENTION

(30) Priorität: 24.08.2016 DE 102016115703
(43) Veröffentlichungstag der Anmeldung: 28.02.2018
(73) Patentinhaber: Jungheinrich Aktiengesellschaft, 22047 Hamburg (DE)
(72) Erfinder: Göpner, Oliver, 23845 Oering (DE); Schüler, Michael, 23923 Schönberg (DE)
(74) Vertreter: Hauck Patentanwaltspartnerschaft mbB

(56) Entgegenhaltungen:
- EP-B1- 2 851 331
- DE-A1-102012 016 783
- DE-A1-102012 018 427
- US-A1- 2012 245 765

## Beschreibung

Die vorliegende Erfindung betrifft ein Flurförderzeug, insbesondere ein Kommissionierfahrzeug sowie ein Verfahren zur Steuerung eines Flurförderzeugs.

Aus DE 10 2012 016 783 A1 ist eine Positionsbestimmung für eine mobile Vorrichtung in Bezug auf ein Fahrzeug bekannt geworden. Hierbei wird die Position einer mobilen Vorrichtung in Bezug auf ein Fahrzeug durch die Laufzeit bei einer Übertragung von Funksignalen zwischen mindestens zwei Antennen des Fahrzeugs und der mobilen Vorrichtung bestimmt. In Abhängigkeit von den Laufzeiten wird die Position der mobilen Vorrichtung in Bezug auf das Fahrzeug bestimmt.

Aus EP 2 851 331 B1 ist ein Verfahren zur Steuerung eines Flurförderzeugs bekannt geworden, bei dem das Flurförderzeug einen optischen Sensor mit einem Überwachungsbereich aufweist, wobei der optische Sensor mit einer Steuerungsvorrichtung verbunden ist, die die Position einer Person innerhalb eines für den optischen Sensor vorgegebenen Überwachungsbereichs bestimmt und nachführt. Innerhalb des Überwachungsbereichs sind Überwachungsgrenzen in Form von Grenzlinien vorgegeben, zu denen die Steuervorrichtung überwacht, ob die Position der Person die Überwachungsgrenze überschreitet. Wird das Überschreiten der Grenzlinie festgestellt, so wird ein Fahrantrieb des Flurförderzeugs solange angesteuert, bis die Position der Person wieder auf der ursprünglichen Seite der Überwachungsgrenze liegt. Auf diese Weise kann beispielsweise ein Mindestabstand einer Person von dem Fahrzeug sichergestellt werden.

Aus DE 10 2012 018 427 A1 ist ein Verfahren zur Ortung eines Mobilteils relativ zu einem Zielgerät bekannt. Für die relative Ortung zwischen einem Mobilteil und einem Zielgerät wird eine auf Funksignalen basierende Entfernungsmessung beschrieben. Bei dieser können Laufzeiten der Funksignale oder aber auch Phasenlagen der Funksignale ausgewertet werden. Die Entfernungsmessungen werden für eine sogenannte Trilateration genutzt, bei der Entfernungen des Mobilteils zu mindestens drei verschiedenen Referenzpunkten (Anker) bestimmt werden. Die Referenzpunkte können separate Antennen oder Sende-/Empfangseinheiten am Zielgerät sein, wobei die Anordnung der Referenzpunkte zueinander bekannt sein muss und mit in die Auswertung einfließt.

Nachteilig an dem bekannten Verfahren zur Steuerung eines Kommissionierfahrzeugs ist, dass mit dem optischen System Bewegungen der Bedienperson in dem Wahrnehmungsbereich des optischen Sensors zu unklaren Situationen führen können.

Der Erfindung liegt die Aufgabe zugrunde, ein Flurförderzeug sowie ein Verfahren zur Steuerung eines Flurförderzeugs bereitzustellen, die ein sicheres Arbeiten mit dem fahrenden Flurförderzeug ohne die Gefahr einer Verletzung gestatten.

Erfindungsgemäß wird die Aufgabe durch ein Flurförderzeug mit den Merkmalen aus Anspruch 1 sowie ein Verfahren mit den Merkmalen aus Anspruch 10 gelöst. Vorteilhafte Ausgestaltungen bilden die Gegenstände der Unteransprüche.

Das erfindungsgemäße Flurförderzeug ist mit einem Antriebsteil und einem Lastteil ausgestattet. Der Antriebsteil besitzt einen Fahrantrieb und eine Lenkung. Das Lastteil ist zum Transport, insbesondere zum Kommissionieren von Produkten, geeignet. An dem Antriebsteil des erfindungsgemäßen Flurförderzeugs sind mindestens drei Sende- und Empfangseinheiten in einer vorbestimmten räumlichen Anordnung zueinander angebracht. Die drei Sende- und Empfangseinheiten besitzen relativ zueinander eine definierte räumliche Position, die sich auch im Betrieb des Flurförderzeugs nicht relativ zueinander ändert. Ferner ist das erfindungsgemäße Flurförderzeug mit einer Auswerteeinheit ausgestattet, die über eine Messung von Signallaufzeiten eine Position einer tragbaren Sende- und Empfangseinheit relativ zu dem Flurförderzeug bestimmt. Die Messung über die Signallaufzeiten ist dabei nicht nur auf eine reine Zeitmessung beschränkt, sondern kann beispielsweise auch auf Phasenunterschiede zwischen ein- und auslaufenden Signalen zurückgreifen. Das erfindungsgemäße Flurförderzeug weist zudem eine Steuereinheit auf, die einen Steuerbefehl für den Fahrantrieb und/oder die Lenkung absetzt, wenn die relative

Position der mobilen Sende- und Empfangseinheit innerhalb eines vorbestimmten Raumbereichs relativ zu dem Flurförderzeug liegt. Der vorbestimmte Raumbereich muss hierbei nicht unbedingt ein dreidimensionaler Raumbereich sein, sondern kann je nach Ergebnis der Auswerteeinheit auch eine zweidimensionale Ebene sein. Bei dem erfindungsgemäßen Ansatz, über vorbestimmte Raumbereiche Steuerbefehle für das Flurförderzeug, sei es zum Fahren oder zur Lenkung des Flurförderzeugs, auszulösen, ist es möglich, mit dem Fahrzeug, beispielsweise beim Kommissionieren von Waren, zu interagieren und das Fahrzeug durch einen Positionswechsel zu steuern.

Erfindungsgemäß weist die Steuereinheit einen das Lastteil umfassenden ersten vorbestimmten Raumbereich auf, dem ein Steuerbefehl zum Abstoppen und/oder Abbremsen des Fahrzeugs zugeordnet ist. Der erste vorbestimmte Raumbereich befindet sich im Lastteil, der insbesondere auch zum Kommissionieren geeignet ist. Befindet sich die tragbare Sende- und Empfangseinheit in diesem Raumbereich, so wird ein Steuerbefehl zum Abstoppen und/oder Abbremsen des Fahrzeugs zugeordnet. Das Abstoppen und/oder Abbremsen kann hierbei sowohl ein motorisches Bremsen als auch den Einsatz einer Bremse umfassen. Durch die Zuordnung des Steuerbefehls zum Abstoppen und/oder Abbremsen des Fahrzeugs zu dem ersten vorbestimmten Raumbereich wird sichergestellt, dass das Flurförderzeug nicht seine Position ändert, wenn die tragbare Sende- und Empfangseinheit sich im Bereich des Lastteils befindet. Bei der Erfindung kann für den Steuerbefehl des ersten Raumbereichs eine relative Position ausgewählt werden, in der das Abbremsen und/oder das Abstoppen des Flurförderzeugs erfolgt. Diese relative Position kann beispielsweise eine Position nahe an einem Ende des Lastteils sein, so dass eine ergonomisch günstige Arbeitsposition erreicht wird.

In einer bevorzugten Ausgestaltung weist die Steuereinheit zwei oder mehr vorbestimmte Raumbereiche auf, denen jeweils Steuerbefehle zugeordnet sind. Auf diese Weise können zwei verschiedene Steuerbefehle an dem Fahrzeug ausgeführt werden, wobei die Steuerbefehle durch die relative Position der mobilen Sende- und Empfangseinheit relativ zu dem Fahrzeug ausgelöst werden.

In einer bevorzugten Ausgestaltung sind die vorbestimmten Raumbereiche, denen Steuerbefehle zugeordnet sind, symmetrisch zu einer Fahrzeuglängsrichtung angeordnet. Dies bedeutet, dass, wenn auf der rechten Fahrzeugseite ein Raumbereich vorgesehen ist, dem ein Steuerbefehl zugeordnet wurde, so ist auf der linken Seite ebenfalls ein Raumbereich vorgesehen, dem derselbe Steuerbefehl zugeordnet ist. Der Fahrer und Benutzer des erfindungsgemäßen Flurförderzeugs braucht also nicht zu unterscheiden, ob er sich auf der linken oder der rechten Seite des Flurförderzeugs befindet.

In einer weiter bevorzugten Ausgestaltung des Flurförderzeugs ist auf jeder Seite des Antriebsteils jeweils ein zweiter vorbestimmter Raumbereich vorgesehen, denen jeweils ein Steuerbefehl für eine Fahrt zugeordnet ist. Befindet sich die tragbare Sende- und Empfangseinheit in dem zweiten vorbestimmten Raumbereich, so fährt das Flurförderzeug mit einer vorbestimmten Geschwindigkeit, beispielsweise einer Schrittgeschwindigkeit. Der zweite Raumbereich kann dazu genutzt werden, um einen Mitgeh-Modus oder Follower-Modus für das Flurförderzeug einzustellen. Bleibt das Flurförderzeug beispielsweise stehen, wenn die tragbare Sende- und Empfangseinheit den zweiten Raumbereich verlässt, dann kann eine die tragbare Sende- und Empfangseinheit mit sich führende Person neben dem Flurförderzeug hergehen.

In einer bevorzugten Weiterführung der Erfindung besitzt die Steuereinheit einen auf der von dem Lastteil fortweisenden Seite des Antriebsteils liegenden dritten vorbestimmten Raumbereich. Dem dritten vorbestimmten Raumbereich ist ein Steuerbefehl zugeordnet, der das Flurförderzeug abstoppt und/oder abbremst. In einer bevorzugten Ausgestaltung decken erster, zweiter und dritter Raumbereich den Bereich um das Flurförderzeug vollständig ab, wobei der zweite Raumbereich auf beiden Seiten des Fahrzeugs vorgesehen ist.

In einer bevorzugten Weiterentwicklung des erfindungsgemäßen Flurförderzeugs ist mindestens eine vierte Sende- und Empfangseinheit an dem Antriebsteil angeordnet. Die Sende- und Empfangseinheit ist dazu ausgebildet, um zusätzlich eine Höhe über dem Boden für die mobile Sende- und Empfangseinheit zu bestimmen. Während die Höhe der tragbaren Sende- und Empfangseinheit über dem Boden in den Raumbereichen keine Bedeutung hat, kann die Höhe als gesonderte Information ausgewertet werden. In der Regel sind hierzu die Sende- und Empfangseinheiten in einer vorbestimmten Lage zueinander erforderlich.

Beispielsweise kann die Höhe der tragbaren Sende- und Empfangseinheit durch die Steuereinheit dahingehend ausgewertet werden, dass, ansprechend auf die erkannte Höhe der mobilen Sende- und Empfangseinheit, ein Steuerbefehl für das Lastteil/Fahrzeug abgesetzt wird. Bei dem Steuerbefehl kann es sich beispielsweise um einen Steuerbefehl zum Abstoppen und/oder Abbremsen des Fahrzeugs handeln, wenn die erfasste Höhe unter einer Mindesthöhe liegt. Die Mindesthöhe kann hierbei so gewählt werden, dass ein Unterschreiten der Mindesthöhe ein klares Anzeichen dafür ist, dass die tragbare Sende- und Empfangseinheit auf dem Boden liegt oder sich in Bodennähe befindet. Ursächlich dafür kann sein, dass die tragbare Sende- und Empfangseinheit heruntergefallen ist oder eine diese mit sich führende Person gestürzt ist.

In einer weiteren zweckmäßigen Ausführung ist die Steuereinheit ausgebildet, einen Steuerbefehl für ein Heben oder Senken des Lastteils abzusetzen, wenn die relative Position der tragbaren Sende- und Empfangseinheit im ersten Raumbereich liegt. Im ersten Raumbereich wird bereits sichergestellt, dass das Flurförderzeug nicht fährt. Durch die weiteren Steuerbefehle kann das Lastteil bei der Tätigkeit, beispielsweise beim Kommissionieren, angehoben und gesenkt werden. Auch bei anderen Vorgängen kann das Lastteil in seiner Höhe an die erfasste Höhe der tragbaren Sende- und Empfangseinheit angepasst werden.

Die erfindungsgemäße Aufgabe wird ebenfalls durch ein Verfahren zur Steuerung eines Flurförderzeugs, insbesondere eines Kommissionierfahrzeugs, mit den Merkmalen aus Anspruch 10 gelöst.

Das erfindungsgemäße Verfahren ist vorgesehen und bestimmt zur Steuerung eines Flurförderzeugs, insbesondere eines Kommissionierfahrzeugs. Das Flurförderzeug besitzt mindestens drei in einer vorbestimmten räumlichen Anordnung zueinander an dem Antriebsteil vorgesehene Sende- und Empfangseinheiten, die zu einer Laufzeitmessung mit einer tragbaren Sende- und Empfangseinheit ausgebildet sind. Das erfindungsgemäße Verfahren sieht vor, eine relative Position der tragbaren Sende- und Empfangseinheit gegenüber dem Flurförderzeug über eine Laufzeitmessung der fahrzeugfesten Sende- und Empfangseinheiten zu bestimmen. Ferner sieht das Verfahren vor, ein Ansteuern des Flurförderzeugs vorzunehmen, wenn die relative Position gegenüber dem Flurförderzeug innerhalb eines vorbestimmten Raumbereichs liegt. Hierbei liegt eine inhaltliche Zuordnung der Art der Ansteuerung des Flurförderzeugs und des vorbestimmten Raumbereichs vor, in dem die tragbare Sende- und Empfangseinheit bestimmt wurde. Bei dem erfindungsgemäßen Verfahren wird bevorzugt solange ein Steuerbefehl abgesetzt, solange sich die tragbare Sende- und Empfangseinheit in einem vorbestimmten

Raumbereich befindet. Dies bedeutet, bei dem erfindungsgemäßen Verfahren wird nicht versucht, eine Bedienperson auf einer Seite einer vorgezogenen Grenze zu halten, sondern die Sende- und Empfangseinheit in einem Raumbereich löst einen Steuerbefehl aus.

Erfindungsgemäß wird das Flurförderzeug abgestoppt und/oder gebremst, wenn die relative Position der tragbaren Sende- und Empfangseinheit sich in einem ersten Raumbereich befindet, der ein Lastteil des Flurförderzeugs umfasst. Befindet sich die tragbare Sende- und Empfangseinheit in einem Raumbereich rund um das Lastteil, so wird verhindert, dass das Flurförderzeug fährt oder lenkt, wobei eine etwaige Lenk- oder Fahrbewegung abgestoppt und/oder gebremst wird. Bei dem erfindungsgemäßen Verfahren wird das Flurförderzeug in einer wählbaren relativen Position zu der tragbaren Sende- und Empfangseinheit abgestoppt und/oder abgebremst. Die wählbare relative Position erlaubt es, mit dem Flurförderzeug eine von mehreren Positionen relativ zu der tragbaren Sende- und Empfangseinheit auszuwählen. Beispielsweise kann dies ein Anfang oder ein Ende des Lastteils sein.

In einer bevorzugten Weiterbildung des Verfahrens wird das Flurförderzeug in zwei oder mehr vorbestimmten Raumbereichen angesteuert. Durch zwei oder mehr Raumbereiche können so zwei oder mehr Steuerbefehle für das Flurförderzeug abgesetzt werden.

In einer weiteren bevorzugten Ausgestaltung kann die auswählbare Position an der tragbaren Sende- und Empfangseinheit ausgewählt werden. Wird die tragbare Sende- und Empfangseinheit von einem Benutzer des Flurförderzeugs mit sich geführt, so kann dieser das Fahrzeug relativ zu sich in eine gewünschte Position bringen.

In einer bevorzugten Ausgestaltung des erfindungsgemäßen Verfahrens wird das Flurförderzeug zu einer Fahrt, insbesondere zu einer Geradeausfahrt angesteuert, wenn die relative Position sich in einem zweiten vorbestimmten Raumbereich befindet, der auf beiden Seiten, bezogen auf die Fahrzeuglängsrichtung, vorgesehen ist. Der zweite vorbestimmte Raumbereich umfasst das Antriebsteil. Beträgt die Geschwindigkeit für das Flurförderzeug bei einer Ansteuerung aus dem zweiten Raumbereich heraus ungefähr Schrittgeschwindigkeit, so kann eine die tragbare Sende- und Empfangseinheit mit sich führende Person neben dem Fahrzeug hergehen, wobei dieses dann stoppt, wenn die Person stehen bleibt und somit der tragbare Sensor den zweiten Raumbereich verlässt. Ein Anfahren einer vorbestimmten Relativposition, beispielsweise am Ende des Lastteils, kann durch einen Steuerbefehl aus einem an den zweiten Raumbereich angrenzenden Raumbereich erfolgen.

In einer bevorzugten Ausgestaltung wird das Flurförderzeug abgestoppt und/oder abgebremst, wenn die relative Position sich in einem dritten vorbestimmten Raumbereich befindet, der auf einer von dem Lastteil fortweisenden Seite des Antriebsteils liegt. Bevorzugt umschließen erster, zweiter und dritter Raumbereich das Flurförderzeug vollständig.

In einer bevorzugten Weiterbildung des erfindungsgemäßen Verfahrens wird für die mobile Sende- und Empfangseinheit eine Höhe über dem Boden bestimmt und das Flurförderzeug höhenabhängig angesteuert. Die höhenabhängige Ansteuerung kann auch unter Sicherheitsaspekten eingesetzt werden, beispielsweise wenn die Höhe der tragbare Sende- und Empfangseinheit unterhalb einer vorbestimmten Mindesthöhe liegt. In diesem Fall könnte die Sende- und Empfangseinheit heruntergefallen sein und auf den Boden liegen oder die diese mit sich führende Person ist gestürzt. Weiterhin ist es möglich, das Lastteil abhängig von einer Höhe der tragbaren Sende- und Empfangseinheit anzuheben und abzusenken, wodurch ein Be- und Entladen für einen Benutzer deutlich vereinfacht wird.

Ein bevorzugtes Beispiel der Erfindung wird nachfolgend näher erläutert. Es zeigen:
- Fig. 1: ein Kommissionierfahrzeug sowie eine Person mit einer tragbaren Sende- und Empfangseinheit in einer schematischen Ansicht von oben und
- Fig. 2: das Fahrzeug aus Fig. 1, wobei eine Bedienperson sich neben dem Fahrzeug befindet.

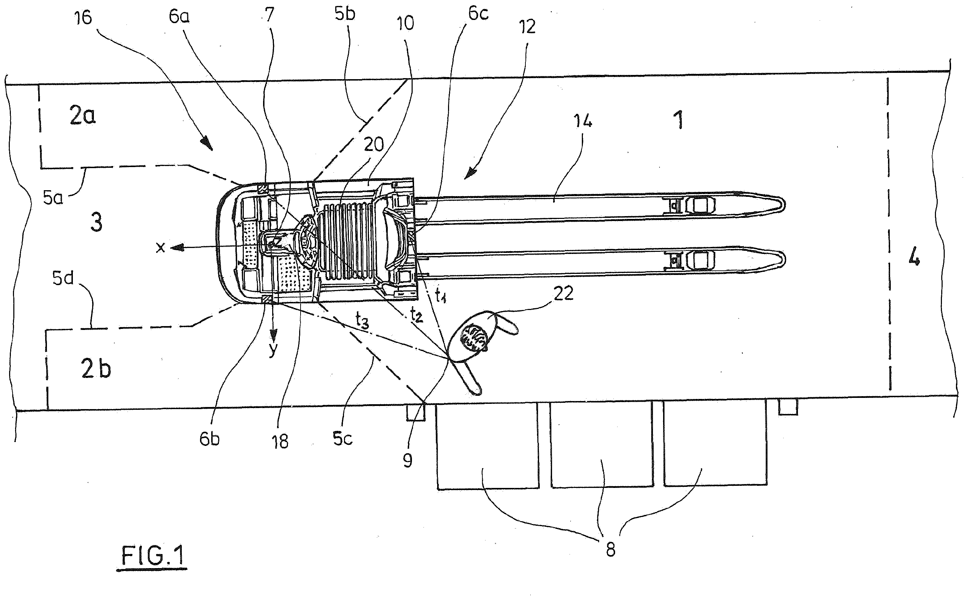

Fig. 1 zeigt ein Flurförderzeug 10 in einer Ansicht von oben. Das Flurförderzeug 10 besitzt ein Lastteil 12 mit zwei Lastgabeln 14. Die Lastgabeln 14 besitzen eine Länge zur Aufnahme mehrerer Paletten, die zum Kommissionieren von Waren ausgebildet sind. Ein Antriebsteil 16 des Flurförderzeugs ist mit einer Kurzdeichsel 18 und einem Fahrerstandplatz 20 ausgebildet. Auf dem Fahrerplatz 20 stehend, kann ein Fahrzeugführer 22 über die Kurzdeichsel 18 das Fahrzeug führen.

Das Antriebsteil 16 ist mit drei Sende- und Empfangseinheiten 6a, 6b, 6c ausgestattet. Bezogen auf das fahrzeugfeste Koordinatensystem 7 liegen die Sende- und Empfangseinheiten 6a, 6b bei gleicher X- und Z-Position bei einem positiven und negativen Y-Wert, während die Sende- und Empfangseinheit 6c bei einem Y-Wert von Null liegt. Grundsätzlich kann die Position der drei Sende- und Empfangseinheiten 6a, 6b, 6c weitgehend beliebig an dem Flurförderzeug liegen. Für die Auswertung der Laufzeiten ist es lediglich erforderlich, dass für jede der Sende- und Empfangseinheiten 6a, 6b, 6c ihre Koordinaten in dem fahrzeugfesten Koordinatensystem 7 bekannt ist.

Die Sende- und Empfangseinheiten 6a, 6b, 6c kommunizieren mit einer tragbaren Sende- und Empfangseinheit 9, die der Fahrer 22 mit sich trägt. Die tragbare Sende- und Empfangseinheit kann beispielsweise am Oberarm befestigt sein, sie kann aber auch in die Kleidung integriert sein als Kleidungsstück, wie beispielsweise als Handschuh angezogen, als Kopfbedeckung aufgesetzt oder in Form eines Anhängers um den Hals getragen werden.

Zwischen der tragbaren Sende- und Empfangseinheit 9 und den fahrzeugfesten Sende- und Empfangseinheiten 6a, 6b, 6c werden die Laufzeiten t₁, t₂ und t₃ bestimmt. Aus den drei Laufzeiten kann dann die Position der tragbaren Sende- und Empfangseinheit 9 in dem fahrzeugfesten Koordinatensystem 7 bestimmt werden. Bei der Verwendung von drei Sende- und Empfangseinheiten ist es mit drei Laufzeiten t₁, t₂, t₃ nicht unbedingt möglich, die tragbare Sende- und Empfangseinheit 9 auch im Hinblick auf die Z-Achse richtig zu orten. Es wird daher die Position der tragbaren Sende- und Empfangseinheit 9 bevorzugt in der XY-Ebene bestimmt. Für eine genaue Auflösung in der Z-Achse wird bevorzugt eine vierte fahrzeugfeste Sende- und Empfangseinheit (nicht dargestellt) eingesetzt. Über die vierte Laufzeit t₄ kann dann die Position der tragbaren Sende- und Empfangseinheit 9 auch im dreidimensionalen Raum präzise bestimmt werden.

Der gesamte Bereich in der XY-Ebene um das Flurförderzeug 10 herum ist in vier Bereiche 1, 2a, 2b und 3 unterteilt. Die Bereiche sind untereinander durch Grenzen 5a, 5b, 5c und 5d geteilt. Einzelne Grenzen 5a bis 5d können aus einer geraden Linie bestehen. Andere Grenzen können einen komplexeren Verlauf besitzen.

Der Raumbereich 1 umfasst das Lastteil 12 des Flurförderzeugs 10. Die Lastgabeln 14 liegen vollständig innerhalb des Raumbereichs 1. Auch die Fahrerstandplattform befindet sich noch in dem Raumbereich 1, so dass, wenn der Fahrer 22 die Fahrerstandplattform 20 verlässt, er sich direkt in dem Raumbereich 1 befindet. Dem Raumbereich 1 ist der Steuerbefehl zugeordnet, dass das Flurförderzeug bremst oder abstoppt. Dies bedeutet, wenn das Fahrzeug fährt, wird dieses zum Stillstand gebracht. Für das stehende Fahrzeug ist kein Fahrbetrieb möglich, wenn die tragbare Sende- und Empfangseinheit 9 im Raumbereich 1 geortet wird, außer der Fahrzeugführer 22 befindet sich auf dem Fahrerstandplatz 20 und steuert das Fahrzeug 10 manuell mit der Kurzdeichsel 18.

Die Trennlinie für die Grenze zu dem Raumbereich 2 mit seinen Sektoren 2a und 2b entspringt an dem antriebseitigen Ende der Standplattform 20. Die Grenzen 5b und 5c verlaufen jeweils als gerade Linien, die einen spitzen Winkel zur Fahrzeuglängsrichtung hin zum Lastteil 12 des Flurförderzeugs bilden. In den Bereichen 2a und 2b ist ein Steuerbefehl vorgesehen, bei dem das Fahrzeug mit einer definierten Schrittgeschwindigkeit in Richtung der X-Achse fährt. Solange der Fahrer 22 mit der tragbaren Sende- und Empfangseinheit sich in dem Raumbereich 2b oder auch 2a befindet, fährt das Fahrzeug weiter. Der Raumbereich 2b grenzt Richtung Lastteil 12 an den Raumbereich 1. Der Raumbereich 2b erstreckt sich neben dem Fahrzeugkörper auch über das Antriebsteil hinaus, beispielsweise um eine oder mehrere Fahrzeuglängen oder Längen des Antriebsteils.

Ein dritter Raumbereich 3 befindet sich auf der vom Lastteil 12 abgewandten Seite des Antriebsteils 16. Der dritte Raumbereich 3 wird durch das Antriebsteil des Fahrzeugs begrenzt und seitlich durch die beiden Raumbereiche 2a und 2b begrenzt. Am Ende der seitlichen Raumbereiche 2a und 2b ist nur noch Raumbereich 3 vorgesehen, bis dieser, beispielsweise aufgrund der Reichweite der Sensoren, endet.

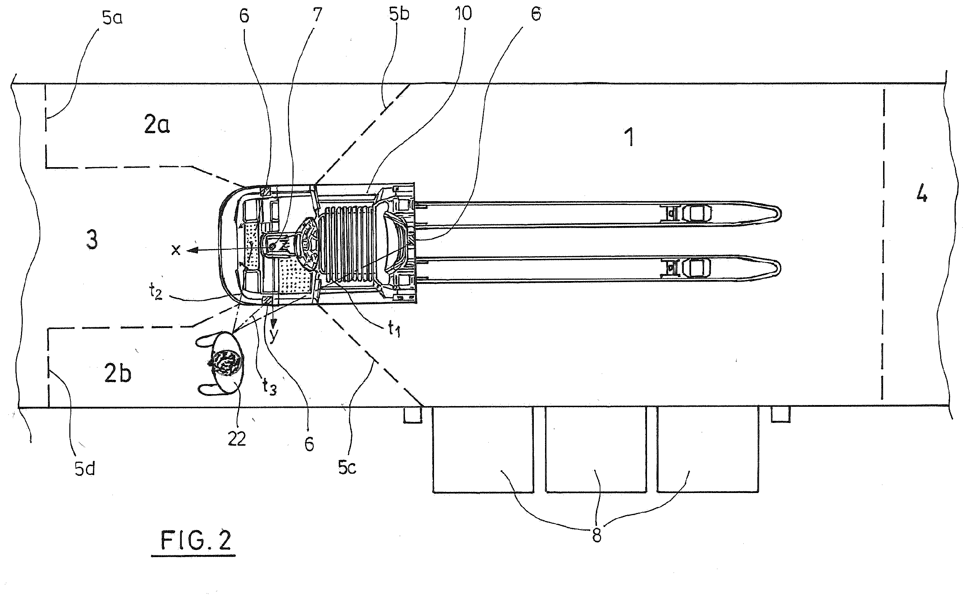

Fig. 2 zeigt, wie der Fahrer sich im Raumbereich 2b aufhält, wodurch das Fahrzeug mit einer vorbestimmten Geschwindigkeit in Richtung des X-Pfeils bewegt wird.

Bleibt die Person stehen, so fährt das Fahrzeug weiter, bis der Fahrer die Grenze 5c überschreitet. Hier versucht das Fahrzeug dann nicht seine Position zu ändern, so dass der Fahrer in den Raumbereich 2b zurückkehrt, sondern bleibt stehen, da sich der Fahrer nunmehr im Raumbereich 1 befindet. Hier kann der Fahrer dann Ware aus dem Regalplätzen 8 kommissionieren.

Ist eine vierte Sende- und Empfangseinheit in dem Flurförderzeug verbaut, so kann die zusätzliche Signallaufzeit t₄ auch zur Bestimmung der Z-Koordinate verwendet werden. Mit der Information über die Z-Koordinate können die Möglichkeiten der Fahrzeugsteuerung erweitert werden. Je nach Höhenbereich, in dem sich die tragbare Sende- und Empfangseinheit 9 befindet, kann das Fahrzeug unterschiedliche Befehle ausführen. So können beispielsweise, wenn die Person mit der tragbaren Sende- und Empfangseinheit 9 stürzt und eine Mindesthöhe in der Z-Koordinate unterschritten wird, das Fahrzeug, unabhängig von dem Bereich, in dem sich die Person zu diesem Zeitpunkt aufhält, abgebremst werden. Auch ist es möglich, ein Heben oder Senken des Lastteils für bestimmte Höhen vorzusehen, wenn sich die Person im Raumbereich 1 befindet.

### Bezugszeichenliste

- 1: Raumbereich
- 2a: Raumbereich
- 2b: Raumbereich
- 3: Raumbereich
- 5a: Grenze
- 5b: Grenze
- 5c: Grenze
- 5d: Grenze
- 6a: Sende- und Empfangseinheit
- 6b: Sende- und Empfangseinheit
- 6c: Sende- und Empfangseinheit
- 7: fahrzeugfestes Koordinatensystem
- 8: Regalplätze
- 9: tragbare Sende- und Empfangseinheit
- 10: Flurförderzeug
- 12: Lastteil
- 14: Lastgabeln
- 16: Antriebsteil
- 18: Kurzdeichsel
- 20: Fahrerstandplatz
- 22: Fahrzeugführer

## Patentansprüche

1. Flurförderzeug (10) mit einem einen Fahrantrieb und eine Lenkung aufweisenden Antriebsteil (16) und einem insbesondere zum Kommissionieren geeigneten Lastteil (12), wobei
- mindestens drei Sende- und Empfangseinheiten (6a, 6b, 6c) in einer vorbestimmten räumlichen Anordnung zueinander an dem Antriebsteil (16) angeordnet sind,
- eine Auswerteeinheit vorgesehen ist, die über eine Messung von Signallaufzeiten (t₁, t₂, t₃) eine Position einer tragbaren Sende- und Empfangseinheit (9) relativ zu dem Flurförderzeug (10) bestimmt und
- eine Steuereinheit vorgesehen ist, die einen Steuerbefehl für den Fahrantrieb und/oder die Lenkung absetzt, wenn die relative Position der tragbaren Sende- und Empfangseinheit (9) innerhalb eines vorbestimmten Raumbereichs (1, 2a, 2b, 3) relativ zu dem Flurförderzeug (10) liegt,
**dadurch gekennzeichnet, dass**
die Steuereinheit einen das Lastteil (12) umfassenden ersten Raumbereich (1) aufweist, dem ein Steuerbefehl zum Abstoppen und/oder Abbremsen des Flurförderzeugs zugeordnet ist, für den eine relative Position, in der das Abbremsen und/oder Abstoppen erfolgt, auswählbar ist.

2. Flurförderzeug nach Anspruch 1, **dadurch gekennzeichnet, dass** die Steuereinheit zwei oder mehr vorbestimmte Raumbereiche (1, 2a, 2b, 3) relativ zu dem Flurförderzeug aufweist, denen jeweils Steuerbefehle zugeordnet sind.

3. Flurförderzeug nach Anspruch 1 oder 2, **dadurch gekennzeichnet, dass** die vorbestimmten Raumbereiche symmetrisch zu einer Fahrzeuglängsrichtung ausgebildet sind.

4. Flurförderzeug nach einem der Ansprüche 1 bis 3, **dadurch gekennzeichnet, dass** auf jeder Seite des Antriebsteils jeweils ein zweiter vorbestimmter Raumbereich (2a, 2b) vorgesehen ist, dem jeweils ein Steuerbefehl für eine Fahrt, insbesondere eine Geradeausfahrt, zugeordnet ist.

5. Flurförderzeug nach einem der Ansprüche 1 bis 4, **dadurch gekennzeichnet, dass** die Steuereinheit einen auf der von dem Lastteil fortweisenden Seite des Antriebsteils liegenden dritten vorbestimmten Raumbereich (3) besitzt, dem ein Steuerbefehl zum Abstoppen und/oder Abbremsen zugeordnet ist.

6. Flurförderzeug nach einem der Ansprüche 1 bis 5, **dadurch gekennzeichnet, dass** mindestens eine vierte Sende- und Empfangseinheit an dem Antriebsteil angeordnet ist und die Auswerteeinheit ausgebildet ist, um zusätzlich eine Höhe über dem Boden der tragbaren Sende- und Empfangseinheit (9) zu erkennen.

7. Flurförderzeug nach Anspruch 6, **dadurch gekennzeichnet, dass** die Steuereinheit zusätzlich dazu ausgebildet ist, ansprechend auf die erkannte Höhe der tragbaren Sende- und Empfangseinheit (9), einen Steuerbefehl für das Lastteil abzusetzen.

8. Flurförderzeug nach Anspruch 7, **dadurch gekennzeichnet, dass** die Steuereinheit ausgebildet ist, einen Steuerbefehl zum Abstoppen und/oder Abbremsen des Fahrzeugs abzusetzen, wenn die erfasste Höhe unter einer Mindesthöhe liegt.

9. Flurförderzeug nach Anspruch 7 oder 8, **dadurch gekennzeichnet, dass** die Steuereinheit ausgebildet ist, einen Steuerbefehl für ein Heben oder Senken des Lastteils abzusetzen, wenn die erfasste Höhe in vorbestimmten Höhenbereichen liegt und die relative Position der tragbaren Sende- und Empfangseinheit im ersten Raumbereich liegt.

10. Verfahren zur Steuerung eines Flurförderzeugs (10), insbesondere eines Kommissionierfahrzeugs, mit mindestens drei in einer vorbestimmten räumlichen Anordnung zueinander an einem Antriebsteil vorgesehenen Sende- und Empfangseinheiten (6a, 6b, 6c), die zu einer Laufzeitmessung mit einer tragbaren Sende- und Empfangseinheit (9) ausgebildet sind, wobei das Verfahren folgende Schritte aufweist:
- Bestimmen einer relativen Position der tragbaren Sende- und Empfangseinheit gegenüber dem Flurförderzeug über eine Laufzeitmessung der fahrzeugfesten Sendeund Empfangseinheiten und
- Ansteuern des Flurförderzeugs, wenn die relative Position gegenüber dem Flurförderzeug innerhalb eines vorbestimmten Raumbereichs (1, 2a, 2b, 3) liegt,
**dadurch gekennzeichnet, dass** das Flurförderzeug abgestoppt und/oder abgebremst wird, wenn die relative Position sich in einem ersten Raumbereich (1) befindet, der ein Lastteil (12) des Flurförderzeugs umfasst, wobei das Flurförderzeug in einer wählbaren relativen Position zu der tragbaren Sende- und Empfangseinheit abgestoppt und/oder abgebremst wird.

11. Verfahren nach Anspruch 10, **dadurch gekennzeichnet, dass** in zwei oder mehr Raumbereichen das Flurförderzeug angesteuert wird.

12. Verfahren nach Anspruch 10 oder 11, **dadurch gekennzeichnet, dass** die relative Position an der tragbaren Sende- und Empfangseinheit ausgewählt werden kann.

13. Verfahren nach einem der Ansprüche 10 bis 12, **dadurch gekennzeichnet, dass** das Flurförderzeug zu einer Fahrt, insbesondere zu einer Geradeausfahrt angesteuert wird, wenn die relative Position sich in einem zweiten vorbestimmten Raumbereich (2a, 2b) befindet, der auf beiden Seiten, bezogen auf die Fahrzeuglängsrichtung, vorgesehen ist.

14. Verfahren nach einem der Ansprüche 10 bis 13, **dadurch gekennzeichnet, dass** das Flurförderzeug abgestoppt und/oder abgebremst wird, wenn die relative Position sich in einem dritten vorbestimmten Raumbereich (3) befindet, der auf einer von dem Lastteil (12) fortweisenden Seite des Antriebsteils liegt.

15. Verfahren nach einem der Ansprüche 10 bis 14, **dadurch gekennzeichnet, dass** für die tragbare Sende- und Empfangseinheit eine Höhe über dem Boden bestimmt wird und das Flurförderzeug höhenabhängig angesteuert wird.

16. Verfahren nach einem der Ansprüche 10 bis 15, **dadurch gekennzeichnet, dass** Flurförderzeug abgestoppt und/oder abgebremst wird, wenn die Höhe unter einer vorbestimmten Mindesthöhe liegt.

17. Verfahren nach einem der Ansprüche 10 bis 16, **dadurch gekennzeichnet, dass** das Lastteil (12) angehoben oder abgesenkt wird, wenn die erkannte Höhe in einem vorbestimmten Höhenbereich liegt und die relative Position sich in dem ersten Raumbereich (1) befindet.

## Claims

1. An industrial truck (10) comprising a drive part (16) with a traction drive and a steering system, as well as a load part (12) that is particularly suitable for order picking, wherein
- at least three transceivers (6a, 6b, 6c) are arranged at predetermined spatial positions from one another on the drive part (16),
- an evaluation unit is provided, which determines a position of a portable transceiver unit (9) relative to the industrial truck (10) by measuring signal transit times (t₁, t₂, t₃), and
- a control unit is provided, which issues a control command for the traction drive and/or the steering system if the relative position of the portable transceiver unit (9) is within a predetermined spatial region (1, 2a, 2b, 3) relative to the industrial truck (10),
**characterised in that**
the control unit has a first spatial region (1) comprising the load part (12), to which a control command for stopping and/or braking the industrial truck is allocated for which a relative position can be selected, at which the braking and/or stopping takes place.

2. The industrial truck according to claim 1, **characterised in that** the control unit has two or more predetermined spatial regions (1, 2a, 2b, 3) relative to the industrial truck, wherein control commands are allocated to each one of said regions.

3. The industrial truck according to claim 1 or 2, **characterised in that** the predetermined spatial regions are designed symmetrically with a longitudinal direction of the truck.

4. The industrial truck according to one of the claims 1 to 3, **characterised in that** a second predetermined spatial region (2a, 2b) is provided on each side of the drive part, to which in each case a control command is allocated for a run, in particular a straight-line run.

5. The industrial truck according to one of the claims 1 to 4, **characterised in that** the control unit has a third predetermined spatial region (3) on the side of the drive part facing away from the load part, to which a control command for stopping and/or braking is allocated.

6. The industrial truck according to one of the claims 1 to 5, **characterised in that** at least one fourth transceiver is arranged on the drive part and the evaluation unit is designed to additionally detect a height of the portable transceiver unit (9) from the floor.

7. The industrial truck according to claim 6, **characterised in that** the control unit is additionally designed to issue a control command for the load part in response to the detected height of the portable transceiver unit (9).

8. The industrial truck according to claim 7, **characterised in that** the control unit is designed to issue a control command for stopping and/or braking the vehicle if the detected height is below a minimum height.

9. The industrial truck according to claim 7 or 8, **characterised in that** the control unit is designed to issue a control command for raising or lowering the load part if the detected height is within predetermined height ranges and the relative position of the portable transceiver unit is within the first spatial region.

10. A method for controlling an industrial truck (10), in particular an order-picking vehicle, comprising at least three transceivers (6a, 6b, 6c), which are arranged at predetermined spatial positions from one another on a drive part which are designed for a delay time measurement using a portable transceiver unit (9), said method comprising the following steps:
- determining a position of the portable transceiver unit relative to the industrial truck by measuring the delay time of the transceivers fixed to the truck, and
- actuating the industrial truck if the position relative to the industrial truck is within a predetermined spatial region (1, 2a, 2b, 3),
**characterised in that** the industrial truck is stopped and/or braked if the relative position is in a first spatial region (1), comprising a load part (12) of the industrial truck, wherein the industrial truck is stopped and/or braked in a selectable position relative to the portable transceiver unit.

11. The method according to claim 10, **characterised in that** the industrial truck is actuated in two or more spatial regions.

12. The method according to claim 10 or 11, **characterised in that** the relative position can be selected on the portable transceiver unit.

13. The method according to one of the claims 10 to 12, **characterised in that** the industrial truck is actuated for a run, in particular for a straight-line run, if the relative position is within a second predetermined spatial region (2a, 2b), which is provided on both sides with respect to the longitudinal direction of the vehicle.

14. The method according to one of the claims 10 to 13, **characterised in that** the industrial truck is stopped and/or braked if the relative position is within a third predetermined spatial region (3), which is on a side of the drive part facing away from the load part (12).

15. The method according to one of the claims 10 to 14, **characterised in that** the height of the portable transceiver unit from the floor is determined and the industrial truck is actuated as a function of height.

16. The method according to one of claims 10 to 15, **characterised in that** an industrial truck is stopped and/or braked if the height is below a predetermined minimum height.

17. The method according to one of the claims 10 to 16, **characterised in that** the load part (12) is raised or lowered if the detected height is within a predetermined height range and the relative position is within the first spatial region (1).

## Revendications

1. Chariot élévateur (10) avec une partie d'entraînement (16) présentant un entraînement d'avance et une direction, et une partie de charge (12) appropriée pour la préparation de commandes, dans lequel
- au moins trois unités d'émission/réception (6a, 6b, 6c) sont disposées dans un agencement spatial prédéterminé les unes par rapport aux autres sur la partie d'entraînement (16),
- il est prévu une unité d'évaluation déterminant une position d'une unité d'émission/réception portable (9) par rapport au chariot élévateur (10) en mesurant le temps de propagation de signal (t₁, t₂, t₃), et
- il est prévu une unité de commande, laquelle donne un ordre de commande pour l'entraînement d'avance et/ou la direction lorsque la position relative de l'unité d'émission/réception portable (9) se trouve dans une région spatiale prédéterminée (1, 2a, 2b, 3) par rapport au chariot élévateur (10),
**caractérisé en ce que**
- l'unité de commande présente une première région spatiale (1) comportant la partie de charge (12), à laquelle est attribué un ordre de commande pour l'arrêt et/ou le freinage du chariot élévateur, pour laquelle une position relative, dans laquelle le freinage et/ou l'arrêt a lieu, peut être sélectionnée.

2. Chariot élévateur selon la revendication 1, **caractérisé en ce que** l'unité de commande présente deux ou plusieurs régions spatiales prédéterminées (1, 2a, 2b, 3) par rapport au chariot élévateur, auxquelles sont attribués respectivement des ordres de commande.

3. Chariot élévateur selon la revendication 1 ou 2, **caractérisé en ce que** les régions spatiales prédéterminées sont formées symétriquement par rapport à une direction longitudinale du véhicule.

4. Chariot élévateur selon l'une des revendications 1 à 3, **caractérisé en ce que** sur chaque côté de la partie d'entraînement, il est prévu respectivement une deuxième région spatiale prédéterminée (2a, 2b) à laquelle est respectivement attribué un ordre de commande pour un déplacement, en particulier un déplacement rectiligne vers l'avant.

5. Chariot élévateur selon l'une des revendications 1 à 4, **caractérisé en ce que** l'unité de commande possède une troisième région spatiale prédéterminée (3) située sur le côté de la partie d'entraînement opposé à la partie de charge, à laquelle est attribué un ordre de commande pour l'arrêt et/ou le freinage.

6. Chariot élévateur selon l'une des revendications 1 à 5, **caractérisé en ce qu'**au moins une quatrième unité d'émission/réception est disposée sur la partie d'entraînement, et l'unité d'évaluation est conçue pour reconnaître également une hauteur au-dessus du sol de l'unité d'émission/réception portable (9).

7. Chariot élévateur selon la revendication 6, **caractérisé en ce que** l'unité de commande est en outre conçue pour donner un ordre de commande pour la partie de charge en réponse à la hauteur reconnue de l'unité d'émission/réception portable (9).

8. Chariot élévateur selon la revendication 7, **caractérisé en ce que** l'unité de commande est conçue pour donner un ordre de commande pour l'arrêt et/ou le freinage du véhicule, lorsque la hauteur détectée est inférieure à une hauteur minimale.

9. Chariot élévateur selon la revendication 7 ou 8, **caractérisé en ce que** l'unité de commande est conçue pour donner un ordre de commande pour un relèvement ou un abaissement de la partie de charge, lorsque la hauteur détectée se trouve dans des plages de hauteurs prédéterminées et la position relative de l'unité d'émission/réception portable se trouve dans la première région spatiale.

10. Procédé pour la commande d'un chariot élévateur (10), en particulier d'un véhicule de préparation de commandes, avec au moins trois unités d'émission/réception (6a, 6b, 6c) prévues dans un agencement spatial prédéterminé sur une partie d'entraînement, lesquelles sont conçues avec une unité d'émission/réception portable (9) pour la mesure du temps de propagation, le procédé comportant les étapes suivantes :
- détermination d'une position relative de l'unité d'émission/réception par rapport au chariot élévateur par une mesure de propagation des unités d'émission/réception fixées au véhicule, et
- commande du chariot élévateur, lorsque la position relative par rapport au chariot élévateur se trouve dans une région spatiale prédéterminée (1, 2a, 2b, 3),
**caractérisé en ce que** le chariot élévateur est arrêté et/ou freiné lorsque la position relative se trouve dans une première région spatiale (1) comportant la partie de charge (12) du chariot élévateur, le chariot élévateur étant arrêté et/ou freiné dans une position relative au choix par rapport à l'unité d'émission/réception portable.

11. Procédé selon la revendication 10, **caractérisé en ce que** le chariot élévateur est commandé dans deux ou plusieurs régions spatiales.

12. Procédé selon la revendication 10 ou 11, **caractérisé en ce que** la position relative peut être sélectionnée sur l'unité d'émission/réception portable.

13. Procédé selon l'une des revendications 10 à 12, **caractérisé en ce que** le chariot élévateur est commandé pour un déplacement, en particulier un déplacement rectiligne vers l'avant, lorsque la position relative se trouve dans une deuxième région spatiale prédéterminée (2a, 2b) prévue de part et d'autre de la direction longitudinale du véhicule.

14. Procédé selon l'une des revendications 10 à 13, **caractérisé en ce que** le chariot élévateur est arrêté et/ou freiné lorsque la position relative se trouve dans une troisième région spatiale prédéterminée (3) située sur un côté de la partie d'entraînement opposé à la partie de charge.

15. Procédé selon l'une des revendications 10 à 14, **caractérisé en ce qu'**une hauteur au-dessus du sol est déterminée pour l'unité d'émission/réception portable et le chariot élévateur est commandé en fonction de la hauteur.

16. Procédé selon l'une des revendications 10 à 15, **caractérisé en ce que** le chariot élévateur est arrêté et/ou freiné lorsque la hauteur se trouve en dessous d'une hauteur minimale prédéterminée.

17. Procédé selon l'une des revendications 10 à 16, **caractérisé en ce que** la partie de charge (12) est relevée ou abaissée lorsque la hauteur reconnue se trouve dans une plage de hauteur prédéterminée et que la position relative se situe dans la première région spatiale prédéterminée (1).
